# EUROPEAN PATENT APPLICATION

(11) **EP 1 402 845 A1**
(43) Date of publication of application: **31.03.2004**
(21) Application number: 03425618.0
(22) Date of filing: 25.09.2003
(51) Int. Cl.: A61C 17/02, A61C 17/16, A61C 17/20, A61C 1/00

(54) **Apparatus for dental treatment and cleaning**

(30) Priority: 27.09.2002 IT BO20020613
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

An apparatus (1) for dental treatment and cleaning comprises at least: a handpiece (2) consisting of a tartar remover powered by mains activation means (3) and supplied with a first fluid from a mains supply for cooling the treatment area through a first supply conduit (4); at least one independent tank (5) containing a second, alternative fluid and connected to a second supply conduit (6) leading into the first conduit (4) at a connection point (P) upstream of the tartar remover (2); first means (7) for selecting the cooling fluid being located and operative on the first and second conduits (4, 6) at an area upstream of the point (P) of connection between the first and second conduits (4, 6) so as to allow the selective passage of one or other of the fluids.

## Description

The present invention relates to an apparatus for dental treatment and cleaning and, in particular, to an apparatus equipped with at least one tartar remover handpiece.

At present, tartar remover handpieces, like other dental cleaning handpieces, whether fitted to a dental unit or forming part of a unit independent of the dental unit, usually operate on electricity and, as cooling fluid, use the fluid (water) from a main supply.

This solution, one of the most widely used at present, does not, however, take into account the higher standards of hygiene required today and the increasing needs for preventive measures to safeguard the health of patients. One such need might, for example, be satisfied by the use of disinfectant and/or sterile fluids already commonly used for other forms of dental treatment.

For this purpose, the Applicant has devised and constructed an apparatus for dental treatment and cleaning that is highly flexible and capable of maintaining a high level of hygiene during dental cleaning treatment sessions.

This purpose is accomplished by an apparatus for dental treatment and cleaning comprising at least: a handpiece consisting of a tartar remover powered by mains activation means and supplied with a first fluid from a mains supply for cooling the treatment area through a first supply conduit; an independent tank containing a second, alternative fluid and connected to a second supply conduit leading into the first conduit at a connection point upstream of the tartar remover; first means for selecting the cooling fluid being located and operative on the first and second conduits at an area upstream of the point of connection between the first and second conduits so as to allow the selective passage of one or other of the fluids.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a diagram of the dental treatment and cleaning apparatus according to the present invention;
- Figure 2 is a diagram of a second embodiment of the dental treatment and cleaning apparatus according to the present invention;

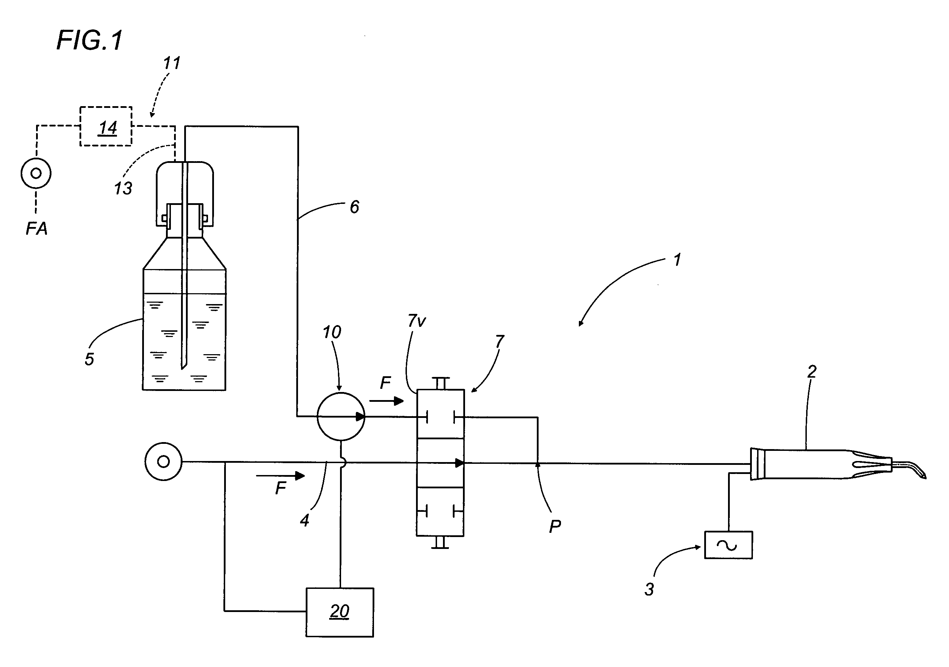

With reference to the accompanying drawings, in particular Figure 1, the apparatus according to the present invention, denoted in its entirety by the numeral 1, is used for dental treatment and cleaning.

The apparatus 1 basically comprises a handpiece 2 consisting of a tartar remover powered by mains activation means 3 (in practice, electricity) and supplied with a first fluid (usually water) from a mains supply for cooling the treatment area through a first supply conduit 4.

In the embodiment illustrated in Figure 1, the apparatus has an independent structure but, as described below, it may form part of an integrated system built into a dental unit or into a more complex «stand alone» type unit.

The apparatus 1 further comprises an independent tank 5 containing a second, alternative fluid and connected to a second supply conduit 6 leading into the first conduit 4 at a connection point P close to the tartar remover 2 or upstream of the tartar remover 2 (as described below).

Also in Figure 1, the numeral 7 denotes means for selecting the cooling fluid to be supplied. The first selection means 7 are located and operative on the first and second conduits 4 and 6 at an area upstream of the point P of connection between the first and second conduits 4 and 6 in the direction of fluid flow F and in such a way as to allow the selective passage of one or other of the fluids.

Looking more closely at the technical details, the second conduit 6 may be equipped with means 10 for activating the supply of the second fluid and located between the independent tank 5 and the first selection means 7.

Purely by way of example, the activation means 10 may be suction means such as a peristaltic pump.

The pump 10 is fitted on the second conduit 6, the second conduit 6 being interchangeable at least in the section of it between the pump 10 and the tank 5 and, preferably, also in that between the pump 10 and the first selection means 7.

This feature makes it easier to maintain the conduit 6 at a high level of hygiene and to substitute it when worn.

Alternatively, the independent tank 5 may be equipped with means 11 for pressurising the tank 5 in such a way as to permit the supply of the second, alternative fluid when the latter is selected using the selection means 7.

More specifically, (see broken line, again in Figure 1), the pressurisation means 11 may comprise a conduit 13 leading into the independent tank 5, supplying compressed air from a source FA and equipped with a check valve 14 allowing the second fluid to flow into the tank 5 when required.

Depending on the type of treatment required, the second, alternative fluid may be a fluid with disinfectant properties, or it may be a sterile fluid.

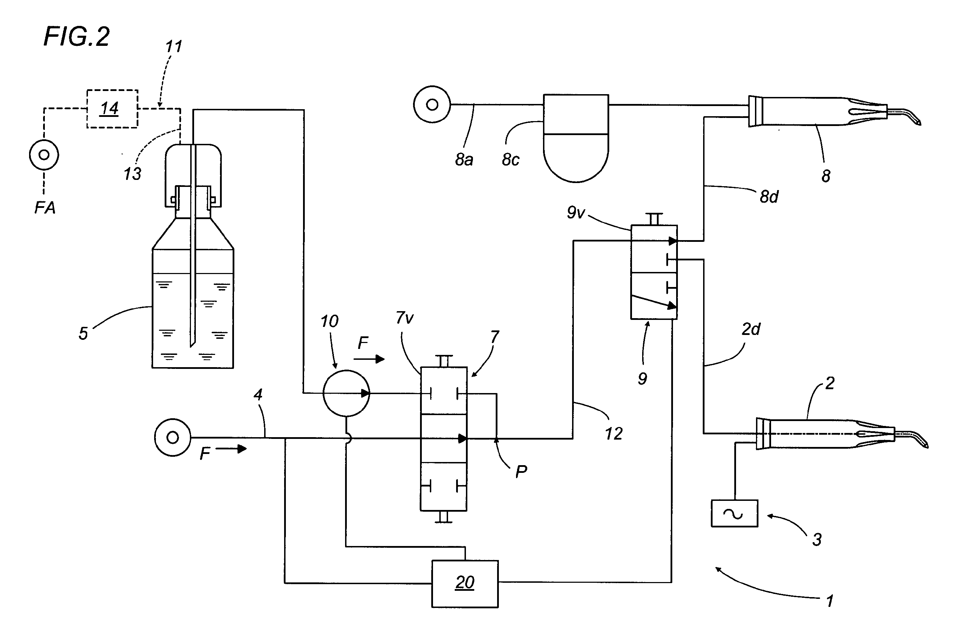

Again with reference to Figures 1 and 2, the first selection means 7 comprise a first distributor element 7v for exchanging the flow of fluids, and which is mobile between a first, working position in which the second conduit 6 is closed and the first fluid is allowed to flow into the tartar remover 2 through the first conduit 4 (this position being illustrated in Figure 1), and a second working position in which the first conduit 4 is closed and the second fluid is allowed to flow into the tartar remover 2 through the second conduit 6.

As illustrated in Figure 2, the apparatus described above may have a plurality of handpieces 2 and 8 and may be configured as an apparatus of the type known as «stand alone» used simultaneously for several patients seated on different chairs each forming part of a different dental unit.

A typical example is the use of the apparatus by a dental hygienist, where the handpieces fitted to the apparatus consist of the aforementioned tartar remover 2 and, as a non-restricting example, a dental whitener 8 which, in the case illustrated, comprises a compressed air supply channel 8a and an abrasive powder container 8c to obtain a mixture of air and powder to be fed to the handpiece 8.

At least the handpiece 2 is powered by the aforementioned electrical mains activation means 3 while both handpieces 2 and 8 are supplied with at least a first fluid (usually water) from a mains supply for cooling the treatment area through a first supply conduit 4.

In this specific case, the apparatus comprises:
- the aforementioned independent tank 5 containing the second, alternative fluid and connected to the second supply conduit 6 which leads into the first supply conduit 4;
- the aforementioned first means 7, for selecting the cooling liquid to be supplied, located and operative on the first and second conduits 4 and 6 at an area upstream of the point P of connection between the first and second conduits 4 and 6 in the direction of fluid flow F and in such a way as to allow the selective passage of one or other of the fluids; and
- second means 9 for selecting the supply of the fluid selected using the first selection means 7, fitted between the connection point P of the first and second conduits 4 and 6 and the related branches 2d and 8d that supply the respective handpieces 2 and 8, and designed to permit direct connection between the handpiece 2 or 8 and the source of the fluid selected.

The tank 5 and the first selection means 7 are structured in the same way as those of the first embodiment described above, as are the means for supplying the second, alternative fluid to the second conduit 6, whilst the second selection means 9 constitute an additional feature of this embodiment not present in the first embodiment.

The second selection means comprise a second distributor element 9v connecting an intermediate conduit 12 from the connection point P of the first and second conduits 4 and 6 to the branches 2d and 8d supplying the respective handpieces 2 and 8.

It is thus possible to first select the type of fluid to be supplied and then the handpiece which the selected fluid is to be supplied to.

Another accessory feature of both the structures described above might be that of independent, time-switched supply means 20 acting on the first and second conduits 4 and 6. The means 20 might, for example, consist of a control device (illustrated schematically as a block in the drawings) that can be activated by the dentist or dental hygienist independently of the activation of the tartar remover 2: in practice, since the handpiece 2 requires fluid only when it is activated, this control device might be used to run the fluid through the system and through the tartar remover 2 in order to clean/rinse and/or disinfect/sterilise them.

Similarly, the independent, time-switched supply means 20 may also be included in the aforementioned «stand alone» embodiment, the only difference being that in this case, they also control the second distributor element 9v so as to allow fluid to run fluid through both the handpieces 2 and 8 in succession in order to clean/rinse and/or disinfect/sterilise them.

In practice, the selected fluid is supplied independently for a predetermined length of time (for example, for a length of time ranging from thirty seconds to two minutes). All the operator has to do is turn on the means 20 and then appropriately direct the handpiece 2 or 8 so that the fluid flowing out of it until the end of the cycle is collected in a suitable container.

The embodiments of the apparatus described above therefore achieve the preset aims thanks to the addition of a simple yet effective system for supplying alternative fluids to the tartar remover and to any other handpieces that might be fitted. This makes it possible to improve and extend the range of possible treatments by supplying disinfectant and/or sterile fluids in the same way as the cooling fluid, thus significantly increasing the level of hygiene attained during treatment and during handpiece cleaning.

It will be understood that the invention can be modified and adapted in several ways without thereby departing from the scope of the inventive concept. Moreover, all the details of the invention may be substituted by technically equivalent elements.

## Claims

1. An apparatus for dental treatment and cleaning, the apparatus (1) being of the type comprising at least one handpiece (2) consisting of a tartar remover powered by mains activation means (3) and supplied with a first fluid from a mains supply for cooling the treatment area through a first supply conduit (4), and being **characterised in that** it further comprises at least one independent tank (5) containing a second, alternative fluid and connected to a second supply conduit (6) leading into the first conduit (4) at a connection point close to the tartar remover (2); first means (7) for selecting the cooling fluid being located and operative on the first and second conduits (4, 6) at an area upstream of the point (P) of connection between the first and second conduits (4, 6)) so as to allow the selective passage of one or other of the fluids.

2. An apparatus for dental treatment and cleaning, the apparatus (1) being of the type comprising at least two handpieces (2, 8), of which at least one is a tartar remover (2), and both of which can be supplied with a first fluid from a mains supply for cooling the treatment area through a first supply conduit (4), and being **characterised in that** it further comprises at least:
- an independent tank (5) containing a second, alternative fluid and connected to a second supply conduit (6) leading into the first supply conduit (4);
- first means (7) for selecting the cooling fluid to be supplied, located and operative on the first and second conduits (4, 6) at an area upstream of the point (P) of connection between the first and second conduits (4, 6)) so as to allow the selective passage of one or other of the fluids;
- second means (9) for selecting the supply of the fluid selected using the first selection means (7), fitted between the connection point (P) of the first and second conduits (4, 6) and the related branches (2d, 8d) that supply the respective handpieces (2, 8), and designed to permit direct connection of the handpiece (2 or 8) to the source of the fluid selected.

3. The apparatus according to claim 1 or 2, **characterised in that** the second conduit (6) is equipped with means (10) for activating the supply of the second fluid and located between the independent tank (5) and the first selection means (7) .

4. The apparatus according to claim 1 or 2, **characterised in that** the independent tank (5) is equipped with means (11) for pressurising the tank (5) in such a way as to permit the supply of the second, alternative fluid when the latter is selected using the selection means (7).

5. The apparatus according to claim 1 or 2, **characterised in that** the second, alternative fluid has disinfectant properties.

6. The apparatus according to claim 1 or 2, **characterised in that** the second, alternative fluid is a sterile fluid.

7. The apparatus according to claim 1 or 2, **characterised in that** the first selection means (7) comprise a first distributor element (7v) with at least two positions for exchanging the flow of fluids, and which is mobile between a first, working position in which the second conduit (6) is closed and the first fluid is allowed to flow into the tartar remover (2) through the first conduit (4), and a second working position in which the first conduit (4) is closed and the second fluid is allowed to flow into the tartar remover (2) through the second conduit (6).

8. The apparatus according to claim 2, **characterised in that** the second selection means (9) comprise a second distributor element (9v) for exchanging the connection between an intermediate conduit (12) extending from the point (P), where the first and second conduits (4, 6) are connected, and the branches (2d, 8d) that supply the respective handpieces (2, 8).

9. The apparatus according to claim 3, **characterised in that** the activation means (10) consist of a peristaltic pump designed to allow the second fluid to be sucked in when required.

10. The apparatus according to claim 4, **characterised in that** the pressurisation means (11) comprise a conduit (13) leading into the independent tank (5) supplying compressed air from a source (FA) and equipped with a check valve (14).

11. The apparatus according to claim 3, **characterised in that** the activation means (10) consist of a peristaltic pump fitted on the second conduit (6), the latter being interchangeable at least in the section of it between the pump (10) and the tank (5).

12. The apparatus according to claim 11, **characterised in that** the second conduit (6), extending between the tank (5) and the first selection means (7) is of the interchangeable type.

13. The apparatus according to claim 1, **characterised in that** it comprises independent, time-switched supply means (20) acting at least on the first and second conduits (4, 6) and designed to supply one of the selected fluids independently of the activation of the handpiece (2), so as to permit a cleaning/rinsing and/or a disinfection/sterilising cycle to be performed on the system and on the handpiece (2).

14. The apparatus according to claim 2, **characterised in that** it comprises independent, time-switched supply means (20) acting at least on the first and second conduits (4, 6) and designed to supply one of the selected fluids independently of the activation of the handpieces (2, 8), so as to permit a cleaning/rinsing and/or a disinfection/sterilising cycle to be performed on the system and on the handpieces (2, 8).

15. The apparatus according to claims 2 and 14, **characterised in that** the time-switched supply means (20) act on the second selection means (9) in such a way as to run fluid through the handpieces (2, 8) in succession.
